# EUROPEAN PATENT APPLICATION

(11) **EP 1 627 612 A1**
(43) Date of publication of application: **22.02.2006**
(21) Application number: 05743707.1
(22) Date of filing: 26.05.2005
(51) Int. Cl.: A61C 13/277, A61C 8/00, A61C 13/32

(54) **PROSTHESIS FIXING STRUCTURE AND PROSTHESIS FIXING METHOD**

(30) Priority: 28.05.2004 JP 2004185674; 18.08.2004 JP 2004266077; 24.01.2005 JP 2005043033
(71) Applicant: Brainbase Corporation, Tokyo 140-0014 (JP)
(72) Inventor: HAYASHI, Osamu, Tokyo 1830054 (JP); SASO, Takamasa, Kanagawa 2440802 (JP); MIZUKAMI, Yoshihiro, Niigata 9450842 (JP); UENO, Hideaki, Niigata 9450000 (JP); ARAI, Shizuo, Saitama 3560051 (JP); TAKAHASHI, Ichiro, Niigata 9450812 (JP); KURIBAYASHI, Takashi, Tokyo 1930832 (JP)
(74) Representative: Betten & Resch
(86) International application number: PCT/JP2005/009679
(87) International publication number: WO 2005/115270

(57) **Abstract**

A prosthesis-fixing structure includes an abutment embedded in a dental root and having a first groove formed on the external surface thereof; a prosthesis having an interlocking section with a second groove formed along an internal surface on a position corresponding to the first groove; and a C-ring fitting to the first and second grooves and supporting the prosthesis to the abutment in a removable state.

## Description

### Technical field

The present invention relates to a prosthesis-fixing structure and a prosthesis-fixing method.

### Background Art

In dental treatment, a prosthesis such as artificial dental crown (hereinafter, to be simply referred to as a "crown") or an artificial tooth denture (hereinafter, to be simply referred to as a "denture") is often fixed to an anchoring support such as tooth or artificial tooth. There are two methods of using a tooth as the anchoring support: a method of using a tooth covered with a crown or denture (hereinafter, to be referred to as an "abutment tooth") and a method of using a tooth not covered with a denture (hereinafter, to be referred to as a "clasp tooth").

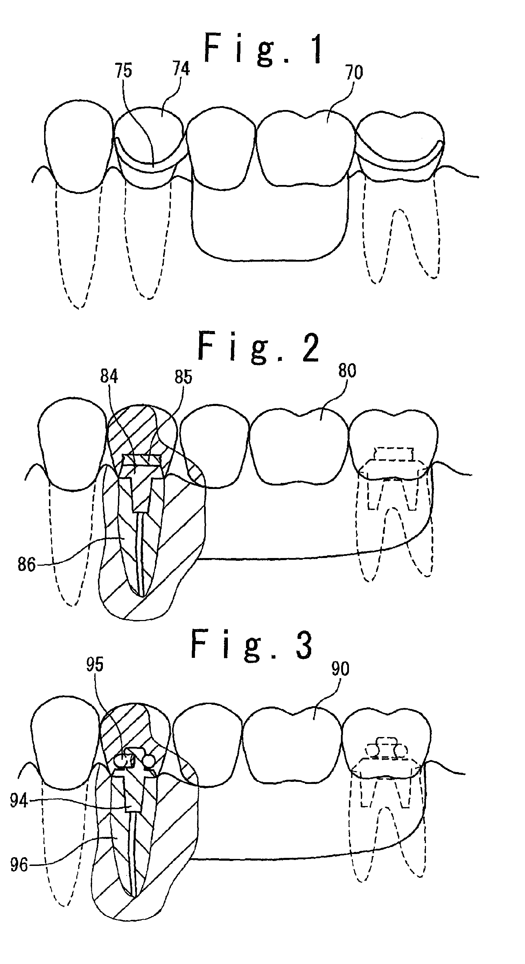

As shown in Fig. 1, when the clasp tooth is used as a denture-anchoring support, a denture 70 is anchored by making the clasp tooth 74 hang a metal wire or resin (hereinafter, to be referred to as a "clasp") 75. In such a case, since the clasp 75 covers part of the tooth, it is not preferable in appearance, gives sense of discomfort to the tongue and the mucous membrane in oral cavity, and possibly causes inflammation.

Also, a method is known of connecting a denture to an abutment tooth as an anchoring support by using a magnet. As shown in Fig. 2, a magnet 85 is connected to a denture 80 in this fixing method. An abutment 84 is fixed to the abutment tooth 86. The abutment 84 is made of a material that attracts the magnet 85. The denture 80 is thus fixed by magnetic force. It is called a magnet denture. However, the fixing force in the side direction to the magnet is weaker. In addition, the magnet denture leaves magnetic force in the abutment in oral cavity, occasionally preventing accurate diagnosis by MRI (magnetic resonance imaging) in the facial area.

Also, a method is known of fixing the denture to the abutment tooth as the anchoring support by using a rubber 0-ring. As shown in Fig. 3, in this fixing method, an abutment 94 is fixed to an abutment tooth 96, and an O-ring 95 connected to a denture 90 is placed around the abutment 94. The denture 90 is fixed in this way. It is called an 0-ring denture. However, the rubber 0-ring deteriorates rather rapidly, demanding frequent replacement of the O-ring and restoration of the denture itself.

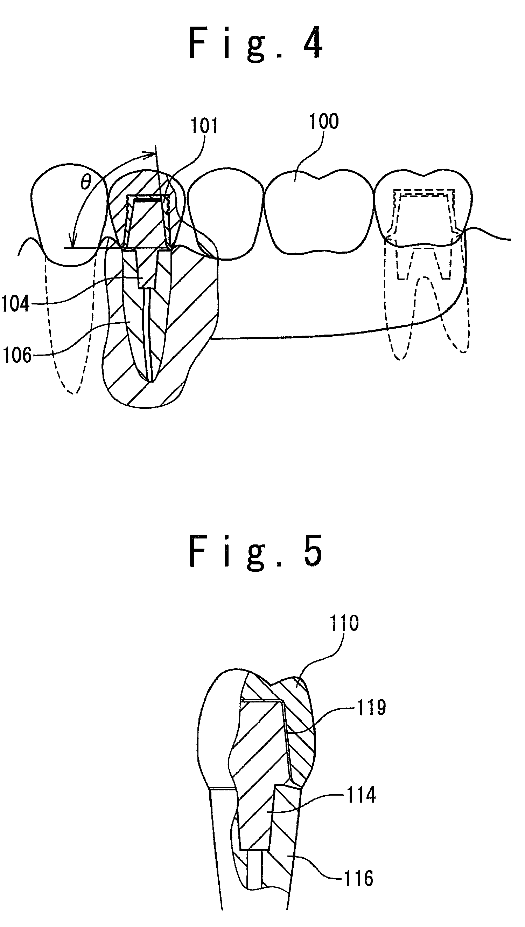

Also, a method called conus type method is known. As shown in Fig. 4, in the conus-type denture-fixing method, an abutment 104 is connected to an abutment tooth 106, and a denture 100 is fixed while an outer crown 101 connected to the denture 100 is placed over the abutment 104. The denture is called a conus denture. However, this method demands very high technical accuracy, because the outer crown is held with frictional resistance. The method is not effective, when the abutment is not compatible well with the outer crown. Accordingly, the method is not used frequently in clinical settings. In case of this method, the surface inclination angle θ of the upper structure of the abutment 104 is preferably larger.

In addition, a method is known of connecting a crown to an abutment tooth by using dental cement (hereinafter, to be referred to as an adhesion method). As shown in Fig. 5, in this fixing method, an abutment 114 is connected to an abutment tooth 116, to form a gap 119 between the abutment 114 and a crown 110. The gap 119 is filled with the dental cement and the crown 110 is adhered to the abutment 114. However, the crown 110 once connected by the method is normally not removable, unless it is broken. Among adhesion and temporary adhesion methods used in dental treatment, there is an adhesion method by using removable dental cement (hereinafter, to be referred to as "temporary adhesion"), but it is difficult to control the adhesion period of time and the crown may become non-removable, if the adhesion period of time is extended.

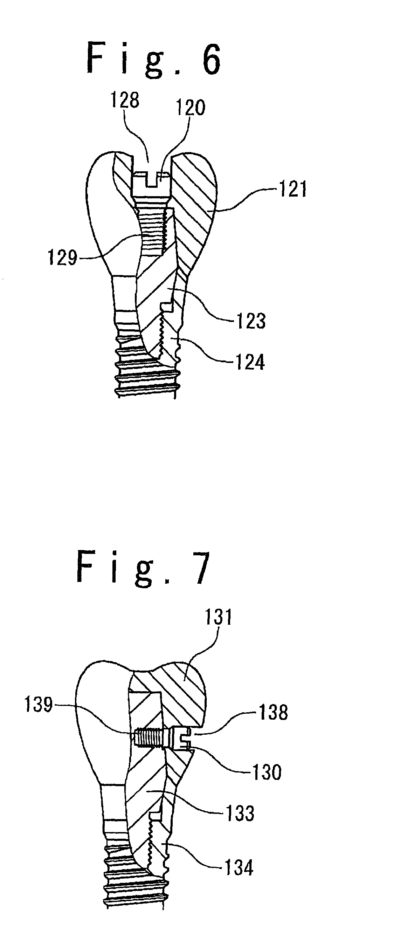

Hereinafter, methods of fixing a crown in implant treatment will be described with reference to Figs. 6 and 7. In implant treatment, dental roots 124 and 134 of the implant made, for example, of titanium are normally inserted into a jawbone. Abutments 123 and 133 are connected onto the dental roots 124 and 134, and prostheses 121 and 131 cover the abutments 123 and 133. The prosthesis-fixing methods used in implant treatment are limited to two methods: a non-removable cement adhesion method described above and a removable screw-fixing method. Although there are the removable screw-fixing crowns that are removable by dentist, they demand very high technical accuracy, leading to expansion of treatment cost.

There are two methods of fixing a removable screw-fixing crown available for dental implant. In one method, as shown in Fig. 6, a through-hole 128 is formed in a crown 121 from its occlusion plane. A threaded hole 129 is formed on the top face of the abutment 123 of the implant 124, and a screw 120 is connected through the through-hole 128 to the threaded hole 129 by screwing. In the other method, as shown in Fig. 7, a through-hole 138 is formed on the sidewall of crown 131 for prevention of screwing from the occlusion plane. A threaded hole 139 is formed on the sidewall of the abutment 133 of an implant 134, and a screw 130 is connected via the through-hole 138 to the threaded hole 139 by screwing. The method by fixing the screw from the side is called "side-screw-fixing method".

In both methods, in which a prosthesis is fixed with a screw, the screw may be loosened through repeated application of the load by occlusion, if the fitting between abutment and crown is inadequate. The screw may be further broken if the condition continues for an extended period of time. In addition, because the screw fixing the screw is very tiny, the operation connecting it accurately in the oral cavity demands skill, and it is highly probable that the screw becomes broken if the connection by screwing is insufficient. Further, the screw-fixing methods demand a greater number of parts and thus very high accuracy in prosthetic dental operation. It also demands a high level of skill of dentist and consequently raises the expense by patient.

For the above reasons, it would be possible to reduce the adverse effects on abutment tooth to the minimum, if there is a prosthetic system in which a patient can disconnect the crown when the patient feels that the abutment tooth is incompatible, and thus to eliminate the sense of incompatibility. The removable screw-fixing method allows disconnection of the prosthesis if the implant is inadequate and also treatment of the implant after disconnection. However, the implant itself may cause problems if the patient leaves the loosening of screw as it is. Accordingly, there is an increasing need for a prosthesis-fixing structure without use of screw that allows easy disconnection of the crown when needed.

### Disclosure of Invention

An object of the present invention is to provide a removable prosthesis-fixing structure and a prosthesis-fixing method, in which a prosthesis such as crown of tooth or the like can be connected to an implant without use of setting screw and yet easily disconnected from the crown by a dentist or patient.

In an aspect of the present invention, the prosthesis-fixing structure includes an abutment connected to a dental root and having a first groove formed on the external surface thereof separated from the dental root, a prosthesis having an interlocking section with a second groove formed along the internal surface on the position corresponding to the first groove, and a C-ring fitting to the first and second grooves and supporting the prosthesis connected to the abutment in a removable state.

The dental root may be an artificial or natural dental root.

The C-ring is made of an elastic material and may be made of a material selected from the group consisting of stainless steel, titanium, and titanium alloys. In addition, the C-ring is preferably coated with Teflon (registered trade name). Alternatively, the C-ring may be made of an elastic plastic material. In such a case, the C-ring is preferably made of a material selected from the group consisting of polypropylene, nylon, polyurethane, polysilicon, acrylic resins, and fiber-reinforced plastics (FRP). The plastic material may be made of a plastic tube in the hollow shape. The diameter of the C-ring wire is preferably in the range of 0.2 to 0.8 mm, from the viewpoints of the easiness of connection and the strength of the ring.

A first diameter ϕ1 of the C-ring in the direction passing through an opening may be larger than a second diameter ϕ2 in the direction perpendicular to the direction of the first diameter. It is possible to use a circular C-ring having an opening and adjust the elastic force by pressing the C-ring in the direction perpendicular to the diameter passing through the opening. In this manner, it is possible to make the C-ring hardly tightly fastened for connection and disconnection of the prosthesis by dentist or loosely fastened for connection and disconnection by patient.

Also, the abutment may have an upper structure in the cone shape, and the fitting section of the prosthesis may have the internal surface compatible with the cone shape. Instead, the abutment may have an upper structure in the polygonal column shape and the fitting region of the prosthesis may have the internal surface compatible with the polygonal column shape. Furthermore, the abutment may have an upper structure in the polygonal pyramid shape and the interlocking region of the prosthesis may have the internal surface compatible with the polygonal pyramid shape.

In another aspect of the present invention, when the prosthesis spans over multiple teeth, the prosthesis-fixing structure includes multiple abutments, a prosthesis having the multiple interlocking sections formed at positions corresponding to the multiple abutments, and multiple C-rings interlocking to multiple abutments and the multiple interlocking sections.

In yet another aspect of the present invention, the prosthesis-fixing method includes using the abutment having the first groove formed around the sidewall and a prosthesis having the interlocking region with the second groove formed on the internal surface at the position corresponding to the first groove; fixing the C-ring to the second groove formed on the interlocking region of the prosthesis; and pressing the prosthesis to the abutment so that the C-ring fits to the first and the second grooves.

In yet another aspect of the present invention, the prosthesis-fixing method includes using the abutment having the first groove formed around the sidewall and the prosthesis having the second groove formed on the internal surface at the position corresponding to the first groove; setting the C-ring to the first groove formed on the abutment; and pushing the prosthesis to the abutment so that the C-ring fits to the first and the second grooves.

### Brief Description of Drawings

Fig. 1 is a diagram showing a conventional method of fixing a denture by connecting a metal or resin wire to clasp teeth;
Fig. 2 is a diagram showing a conventional method of fixing the denture with a magnet;
Fig. 3 is a diagram showing a conventional method of fixing the denture to an abutment with an O-ring;
Fig. 4 is a diagram showing a conventional method of fixing the denture by covering an abutment with an outer crown;
Fig. 5 is a diagram showing a conventional method of fixing a crown to an abutment with cement;
Fig. 6 is a diagram showing a conventional method of fixing the crown to an abutment with a screw;
Fig. 7 is a diagram showing another conventional method of fixing the crown to the abutment with the screw;
Fig. 8 is a partial sectional view showing a prosthesis-fixing structure according to a first embodiment of the present invention;
Fig. 9A is a diagram showing the structure of the crown in the first embodiment;
Fig. 9B is a diagram showing the structure of the abutment in the first embodiment;
Fig. 10A is a diagram showing the shape of a C-ring in the first embodiment of the present invention;
Fig. 10B is a diagram showing the other shape of the C-ring in the first embodiment of the present invention;
Fig. 11A is a partial sectional view showing the prosthesis-fixing structure according to a second embodiment of the present invention that is connected to an abutment tooth for denture anchoring support;
Fig. 11B is a partially magnified diagram showing the fixing structure shown in Fig. 11A;
Fig. 12 is a diagram showing the prosthesis-fixing structure according to a third embodiment of the present invention;
Fig. 13 is a diagram showing the prosthesis-fixing structure according to a fourth embodiment of the present invention; and
Fig. 14 is a diagram showing the prosthesis-fixing structure according to a fifth embodiment of the present invention.

### Best Mode for Carrying Out the Invention

Hereinafter, a prosthesis-fixing structure and a prosthesis-fixing method according to the present invention will be described with reference to the attached drawings.

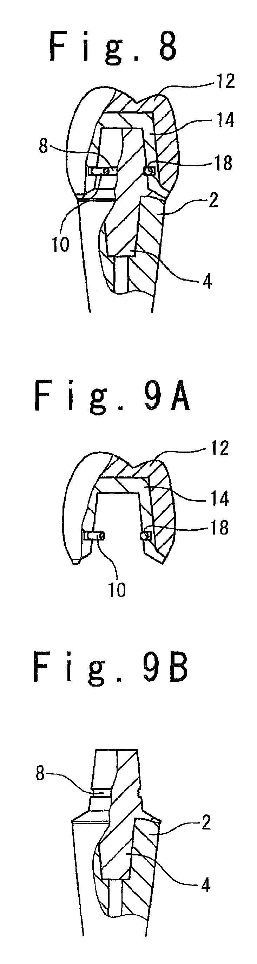

Fig. 8 is a partial sectional view of the prosthesis-fixing structure according to the first embodiment of the present invention. As shown in Fig. 8, the prosthesis-fixing structure has an abutment 4 and a crown. The crown has an outer crown 12 and an inner crown 14.

The abutment 4 is connected to a dental root 2 with a dental cement material. An upper structure of the abutment 4 is conical trapezoid in shape, and a peripheral groove 8 is formed around the sidewall of the conical trapezoidal unit. The crown contains an outer crown 12 and an inner crown 14, and a groove 18 is formed around the internal surface of the inner crown 14. The grooves 8 and 18 are formed in a suitable size, for example, approximately 20% larger than a C-ring 10, for prevention of separation of the C-ring 10 and loosening after fixing. The grooves 8 and 18 have a semicircular or polygonal cross section.

As for the material for the outer crown 12, a tooth crown-restoring material generally used in prosthetic dental operation such as ceramic material or hybrid resin is used after it is molded into a usable shape. Favorable examples of the materials include dental metals, ceramics such as alumina ceramics and zirconia ceramics, titanium, titanium alloys, and the like. The inner crown 14 is made of a stainless steel, a metal such as titanium or titanium alloy, or the like. The abutment 4 is also made of the same material for the inner crown 14.

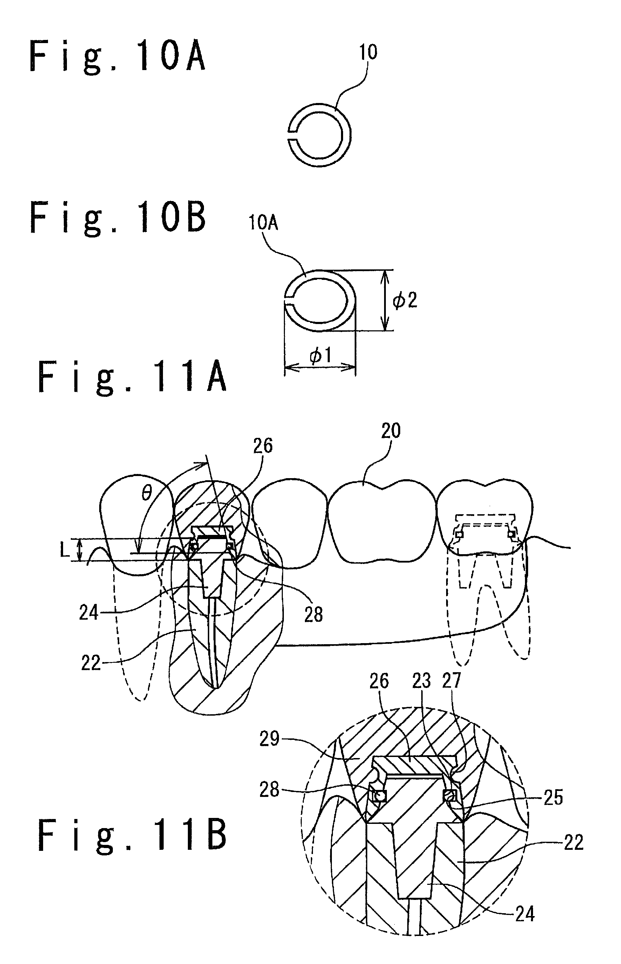

The C-ring 10 normally has a circular ring shape having a partial opening, as shown in Fig. 10A. However, the C-ring may have an elliptical ring shape as shown in Fig. 10A and may be deformed further. Therefore, the diameter ϕ1 of the C-ring in the direction passing through the opening is larger than the diameter ϕ2 in the direction perpendicular to the diameter ϕ1. This makes it possible to adjust the strength during connection and disconnection. The C-ring 10 is made of a material non-corrosive in oral cavity, elastic, and higher in strength such as stainless steel, titanium, and titanium alloy. The wire diameter of the C-ring 10 is preferably 0.2 to 0.8 mm, as it is favorable from the points of compatibility with the groove and strength.

When a crown is fixed as a prosthesis, the C-ring 10 is inserted into the groove 18 of the crown, and the crown is pushed as it covers the abutment 4, as shown in Figs. 9A and 9B. At this time, the C-ring 10 fits to the grooves 8 and 18 and becomes enclosed by the grooves 8 and 18 firmly, prohibiting easy removal of the crown. The grooves 8 and 18 of the abutment 4 and the inner crown 14 are located at the same height, when the abutment 4 is capped with the crown completely. The crown, which is prepared with a tooth crown-restoring material by normal dental operation, represents a prosthesis removable with the C-ring 10.

More specifically, the C-ring 10 is inserted into the groove 18 on the internal surface of the inner crown 14 of the crown. At this time, a part of the C-ring 10 is in the state slightly exposed from the groove 18. The exposed C-ring 10 is expanded when the crown is pushed over the abutment 4 and fits to the abutment 4 at the position of the groove 8. As a result, the crown and the abutment 4 are connected.

The crown is fixed by pushing it onto the abutment 4 and removed by pulling it in the opposite direction. In case of the prosthesis-fixing structure shown in Fig. 8, the C-ring is set to a relatively higher elastic force for disconnection by dentist or to a relatively lower elastic force for easier disconnection by patient. It is possible to adjust the elastic force setting easily only by changing the shape of the C-ring 10 in this manner.

Next, a prosthesis-fixing structure in the second embodiment of the present invention will be described with reference to Figs. 11A and 11B. It is an application example when an abutment tooth is used for fixing the denture. A denture 20 is fixed by covering an abutment 24 with an inner crown 26 embedded in the denture 20. Similarly to the first embodiment, a C-ring 28 is placed between a groove 25 formed on the internal surface of the inner crown 26 and a groove 23 formed on the external surface of the abutment 24. In this way, the denture 20 is connected to the abutment 24. The abutment 24 is adhered to an abutment tooth 22 with dental cement.

For use in fixing the denture 20, height L of the abutment 24 and inclination angle θ of the abutment 24 are preferably as low as possible, because it is easier to connect and disconnect the denture. However, in practice, the L is preferably approximately 1.0 to 5.0 mm, while the θ is approximately 75 to 82 degrees. Fitting strength of the C-ring 28 should be set to a smaller value, because a patient can remove the denture 20. It is also possible to fix an outer crown 29 of the denture 20 to the inner crown 26 more tightly, by forming an undercut region 27 on the external surface of the inner crown 26.

Adhesion processes for example with a cement, screwing processes, and the like have been used in dental treatment for fixing the crown, but it is possible to fix the crown not with a screw but with the C-ring by the method according to the present invention. Accordingly, it becomes easier to prepare the crown and reduce the expense for operation. In addition, dentists as well as patients can connect and disconnect the crown or denture easily, which will expand the application range of dental treatment and allow easier and reliable treatment.

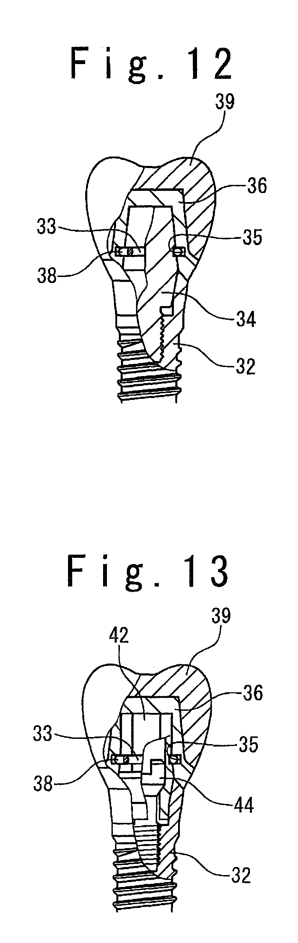

Next, a prosthesis-fixing structure according to the third embodiment of the present invention will be described with reference to Fig. 12. This is an example where an implant is used. As shown in Fig. 12, the prosthesis-fixing structure in the third embodiment has an implant 32 formed as an artificial dental root, an abutment 34, a crown, and a C-ring 38. The crown has an outer crown 39 and an inner crown 36.

The inner crown 36 is made of a dental ceramic material generally used in prosthetic dental operation or a material allowing restoration of the crown of tooth with a hybrid resin, and examples of the materials include dental metals, ceramics such as alumina ceramics and zirconia ceramics, titanium, titanium alloys, and the like. The abutment 34 is made of titanium, a titanium alloy, or the like.

Similarly to the first embodiment, the C-ring 38 has a circular ring shape having an opening, and the connecting and disconnecting strength can be adjusted through slight deformation. The C-ring is made of a material non-corrosive in oral cavity, elastic, and higher in strength such as stainless steel or a titanium alloy. The wire diameter of the C-ring is preferably 0.2 to 0.8 mm, from the points of strength and compatibility with the groove. In the third embodiment, the C-ring having a diameter of 0.55 mm was prepared by using a SUS-301 spring wire having a diameter of 0.35 mm, processing it into the C shape, and coating it with Teflon (registered trade name). It is possible to prepare a dental C-ring higher in elasticity and corrosion resistance by such a processing.

However, the C-ring 38 may be made of a plastic material non-corrosive in the oral cavity, elastic, and higher in strength. A liquid-crystalline plastic higher in anisotropy and strength may be used as the plastic material. In this case, the C-ring 38 may be molded into a ring having a diameter of 0.5 mm by injection or press molding. The diameter of the C-ring may vary according to the size of the prosthesis used, but is preferably 0.2 to 0.8 mm, from the points of compatibility with the groove and strength. Examples of the plastic materials other than those described above include resins superior in strength, corrosion resistance, and the like such as polypropylene, nylon, polyurethane, polysilicon, acrylic resins, fiber-reinforced plastics (FRP), and the like.

Next, a method of fixing the prosthesis-fixing structure in third embodiment will be described. The implant 32 is fixed to the jawbone as an artificial dental root. The abutment 34 is fixed to the dental implant 32 by screwing. The abutment 34 has the upper structure in the conical trapezoidal shape and the groove 33 formed around the sidewall of the upper structure. The groove 33 corresponds in its position to a groove 35 formed on the internal surface of the crown inner crown 36. The C-ring 38 is inserted in the groove 33. The groove 35 of inner crown 36 is then fitted to the C-ring 38, as the crown is pushed onto the abutment 34. The C-ring 38 is placed between the groove 33 of the abutment 34 and the groove 35 of the inner crown 36 firmly and not removable easily. It is possible to prepare a prosthesis (crown) connectable and removable through the C-ring 38 to and from the abutment 34, by forming the outer crown 39 over the inner crown 36 by normal dental operation.

More specifically, the C-ring 38 is fixed to the abutment 34 in the state expanded and slightly exposed from the groove 33. Then, the C-ring 38 is deformed once when the crown is pushed to the abutment 34 and returns to its original shape at the position of the groove 35 of the inner crown 36. In this manner, the crown is fixed to the abutment 34 at the position corresponding to the groove 33 of the abutment 34 and the groove 35 of the inner crown 36. The crown can be removed by pulling it in the direction for removal.

In contrast to the first embodiment, the C-ring 38 is fixed previously to the abutment 34 in the third embodiment. However, it may be first connected to the inner crown 36, in a similar manner to the first embodiment. Likewise, the C-ring 38 may be first connected to the abutment 4 also in the first embodiment.

Next, a prosthesis-fixing structure according to the fourth embodiment of the present invention will be described with reference to Fig. 13. If a single tooth is used, an abutment and an inner crown are connected to each other in the rotation prohibiting structure. At the time, the abutment has a lower structure 44 and an upper structure 42. The lower structure 44 is connected to the implant 32 by screwing. The upper structure 42 does not revolve, as it is connected to the lower structure. The upper structure 42 has a hexagonal column shape, which prohibits the rotation of the crown. The upper structure 42 may have a polygonal column shape, such as quadrangular trapezoidal or octagonal column, or a polygonal frustum shape. It is possible to prevent rotation of the crown in both cases. The peripheral groove 33 for fixing the C-ring 38 is formed on the external surface, i.e., on the edge region, of the upper structure 42. The fitting between abutment and implant for an implant in the area to which no large load is applied, for example, an implant in the bicuspid tooth area may be only taper fitting. When a single crown is used, although it depends on the shape of the crown of tooth, the crown should be connected by dentist and the crown connected firmly so that the patient cannot remove it easily.

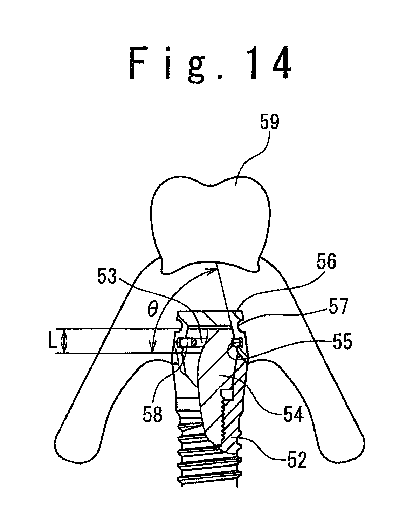

Next, a prosthesis-fixing structure according to the fifth embodiment of the present invention will be described with reference to Fig. 14. It is an example where an implant 52 is used as the abutment for a denture (prosthesis in the form of a residual dental root or implant covered with a denture base). An abutment 54 is connected to an implant 54 by screwing, connected to an inner crown 56 embedded the internal surface of a denture 61, and fixed with a C-ring 58 in a similar manner to the embodiments above. The fitting between an abutment and an implant may be taper fitting. In addition, any one of the C-rings used in the above embodiments may be used as the C-ring 58.

In the fifth embodiment, if multiple crowns are connected, the abutment 54 has an upper structure in the conical trapezoidal shape. If a single crown is used, the abutment 54 preferably has an upper structure in the conical trapezoidal shape as described above, in the polygonal frustum shape, or in the polygonal column shape such as quadrangular trapezoidal and hexagonal trapezoidal. In this way, it is possible to prevent rotation of the crown.

When a denture abutment is used, height L of the abutment of the abutment 53 and inclination angle θ of the interlocking region of the abutment 53 and the inner crown 56, are preferably as low as possible, because the denture become connectable and removable more easily. However, in practice, the L is preferably approximately 1.0 to 5.0 mm and the θ is approximately 75 to 82 degrees. Strength of the C-ring is preferably set to a relatively smaller value, for allowing patients to disconnect the denture. The inner crown 56 for connection to artificial tooth internal surface is fixed more tightly with an undercut region 57 formed.

According to the present invention, a crown internal surface and an abutment are connected to each other, with an elastic C-ring placed in the grooves thereon. It is possible to connect and disconnect the crown by pulling the crown with some force and making a structure allowing the C-ring to separate from the grooves. It is also possible to adjust strength of connection and disconnection by deforming the C-ring slightly. In addition, the present invention is applicable not only to crown but also to denture. When such a removable crown is prepared in conventional dental treatment, the operation by dentist or dental technician was very expensive because it demands complicated steps and high technical accuracy. However, use of the prosthesis-fixing structure according to the present invention allows relatively easy and cost-effective dental treatment and in addition, allows not only dentists but also patients to connect and disconnect the prosthesis.

## Claims

1. A prosthesis-fixing structure comprising:
an abutment connected to a dental root and having a first groove formed on an external surface thereof separated from said dental root;
a prosthesis having an interlocking section with a second groove formed along an internal surface on a position corresponding to said first groove; and
a C-ring fitting to said first and second grooves and supporting said prosthesis to said abutment in a removable state.

2. The prosthesis-fixing structure according to claim 1, wherein said dental root is an artificial dental root.

3. The prosthesis-fixing structure according to claim 1, wherein said dental root is a natural dental root.

4. The prosthesis-fixing structure according to any of claims 1 to 3, wherein said C-ring is made of an elastic material.

5. The prosthesis-fixing structure according to claim 4, wherein said C-ring is made of a material selected from the group consisting of stainless steel, titanium, and titanium alloys.

6. The prosthesis-fixing structure according to claim 5, wherein said C-ring is coated with Teflon.

7. The prosthesis-fixing structure according to claim 4, wherein said C-ring is made of an elastic plastic material.

8. The prosthesis-fixing structure according to claim 7, wherein said C-ring has a hollow shape.

9. The prosthesis-fixing structure according to claim 6 or 8, wherein said C-ring is made of a material selected from the group consisting of polypropylene, nylon, polyurethane, polysilicon, acrylic resins, and fiber-reinforced plastics (FRP).

10. The prosthesis-fixing structure according to any of claims 4 to 9, wherein a wire diameter of said C-ring is in a range of 0.2 to 0.8 mm.

11. The prosthesis-fixing structure according to any of claims 4 to 10, wherein a first diameter ϕ1 of said C-ring in a direction passing through an opening is larger than a second diameter ϕ2 in a direction perpendicular to the direction of the first diameter.

12. The prosthesis-fixing structure according to any of claims 1 to 11, wherein said abutment has an upper structure in a cone shape, and
said interlocking section of said prosthesis has an internal surface compatible with the cone shape.

13. The prosthesis-fixing structure according to any of claims 1 to 11, wherein said abutment has an upper structure in a polygonal column shape, and
said interlocking region of said prosthesis has an internal surface compatible with the polygonal column shape.

14. The prosthesis-fixing structure according to any of claims 1 to 11, wherein said abutment has an upper structure in a polygonal pyramid shape, and
said interlocking section of said prosthesis has an internal surface compatible with the polygonal pyramid shape.

15. A prosthesis-fixing structure comprising:
a plurality of said abutments according to any of claims 1 to 14;
said prosthesis having a plurality of said interlocking sections according to any of claims 1 to 14 provided for said plurality of abutments; and
a plurality of said C-rings provided for said plurality of abutments and said plurality of interlocking sections.

16. A prosthesis-fixing method comprising:
providing an abutment having a first groove formed around a sidewall thereof and a prosthesis having an interlocking section with a second groove formed on an internal surface on a position corresponding to said first groove;
setting a C-ring to said second groove formed on said interlocking section of said prosthesis; and
pressing said prosthesis to said abutment such that said C-ring fits to said first and second grooves.

17. A prosthesis-fixing method comprising:
providing an abutment having a first groove formed around a sidewall thereof and a prosthesis having an interlocking section with a second groove formed on an internal surface on a position corresponding to said first groove;
setting a C-ring to said first groove formed on said abutment; and
pressing said prosthesis to said abutment such that said C-ring fits to said first and second grooves.
